# FASCICULE DE BREVET EUROPEEN

(11) **EP 0 677 569 B1**
(45) Date de publication et mention de la délivrance du brevet: **17.02.1999**
(21) Numéro de dépôt: 95400801.7
(22) Date de dépôt: 10.04.1995
(51) Int. Cl.: B01D 53/34

(54) **Procédé de traitement des résidus solides provenant de la combustion d'un combustible contenant du soufre, et dispositif de traitement thermique pour la mise en oeuvre du procédé**
Verfahren zur Behandlung von festen Rückständen aus der Verbrennung von schwefelhaltigen Brennstoffen und Wärmebehandlungsvorrichtung dafür
Process for treating solid residues from the incineration of sulfur containing fuel, and thermal treatment apparatus therefor

(30) Priorité: 13.04.1994 FR 9404398
(43) Date de publication de la demande: 18.10.1995
(73) Titulaire: GEC ALSTHOM Stein Industrie, 78140 Velizy-Villacoublay (FR)
(72) Inventeur: Morin, Jean-Xavier, F-45170 Neuville aux Bois (FR)
(74) Mandataire: Gosse, Michel

(56) Documents cités:
- EP-A- 0 254 330
- DE-A- 3 428 502
- DE-A- 3 903 250
- US-A- 4 197 285
- US-A- 4 329 324
- PATENT ABSTRACTS OF JAPAN vol. 8 no. 241 (C-250) ,6 Novembre 1984 & JP-A-59 121104 (ISHIKAWAJIMA HARIMA JUKOGYO) 13 Juillet 1984,

## Description

La présente invention concerne la combustion, notamment dans des chaudières à lit fluidisé circulant, sous pression ou à pression atmosphérique, des combustibles contenant du soufre, tels que certains charbons ou résidus pétroliers .

### Etat de la technique

Il est bien connu de capter, dans les chaudières à lit fluidisé circulant, l'anhydride sulfureux SO2 qui se forme lors de la combustion de charbons à forte teneur en soufre, au moyen de chaux CaO provenant de calcaire préalablement introduit dans le foyer. Tels providés sont par exemple divulgués dans DE-A-3 903 250, DE-A-3 428 502 et US-A-4 329 324

Les résidus solides issus de ce type de combustion sont constitués par un mélange de chaux CaO n'ayant pas réagi, de sulfate de calcium CaSO4 formé par la réaction de la chaux de de l'anhydride sulfureux, et de cendres de charbon.

Ces résidus solides sont difficiles à valoriser, notamment en cimenterie, car leur teneur élevée en sulfate de calcium limite leur incorporation dans le ciment pour ne pas abaisser les caractéristiques du ciment.

Par ailleurs, le calcaire introduit dans le foyer est en excès vis-à-vis de la stoechiométrie réactionnelle, ce qui conduit cette technique à produire plus de résidus solides que la technique traditionnelle de traitement des fumées par lavage.

Il est aussi connu de broyer les solides issus d'un foyer à lit circulant pour en contrôler la granulométrie et par suite l'échange de chaleur solides/parois dans le foyer, ce qui permet en outre de n'avoir à traiter que des résidus très fins envolés à travers la chaudière au lieu d'avoir à traiter deux types de résidus, ceux qui arrivent au bas du foyer et ceux qui s'envolent.

On notera enfin, pour compléter cet état de la technique, que les techniques alternatives de production d'énergie par gazéification du charbon présentent la caractéristique de traiter le gaz de synthèse pour en extraire l'hydrogène sulfuré H2S par lavage et le traiter pour aboutir à des produits recyclables tels que le soufre élémentaire ou l'acide sulfurique.

Un but de la présente invention est de définir un procédé dans lequel le bilan total de calcaire injecté dans le foyer correspond à une proportion sensiblement stoechiométrique pour la réaction avec l'anhydride sulfureux, de sorte que les résidus ne peuvent contenir de calcaire en excès. Un autre but de l'invention est de réduire le dégagement d'anhydridr carbonique CO2 provenant de la calcination de ce calcaire.

Un autre but de l'invention est de définir un procédé dans lequel les résidus de combustion peuvent être aisément traités pour conduire à des produits valorisables.

Un autre but de l'invention est de définir un procédé se prêtant à une régulation automatique.

L'invention a pour objet un procédé de traitement des résidus solides provenant de la combustion, dans le foyer d'une chaudière à lit fluidisé circulant, d'un combustible contenant du soufre, procédé selon lequel du calcaire est introduit dans le foyer pour permettre l'absorption de l'anhydride sulfureux produit sous forme de sulfate de calcium CaSO4, caractérisé en ce qu'il comprend en outre les étapes suivantes:
1) on broye le combustible, préalablement à son introduction dans le foyer, à moins de 100 microns,
2) on broie le calcaire, préalablement à son introduction dans le foyer, à une granulométrie centrée dans la plage 100 à 150 microns, avec un maximum de 1 mm,
3) on recueille à la base du foyer les résidus de combustion comprenant de la chaux et du sulfate de calcium provenant de la captation de l'anhydride sulfureux SO2 dégagé par la combustion, et on les traite thermiquement dans un réacteur où l'on obtient un mélange gazeux contenant notamment de l'anhydride sulfureux SO2 et des matières solides à base de chaux CaO,
4) on dirige l'anhydride sulfureux sur une unité de fabrication d'acide sulfurique,
5) on soumet les matières solides à une trempe à l'eau suivie d'un broyage, ces deux opérations ayant pour effet de réactiver la surface spécifique desdites matières solides, et on réinjecte, sous forme de suspension dans l'eau, un partie de ces matières solides dans le foyer de la chaudière, la fraction restante desdites matières étant dirigée vers une utilisation en cimenterie.

Selon une caractéristique de l'invention, le traitement thermique deans le réacteur est effectué avec de l'air enrichi,

Selon une autre caractéristique de l'invention, on introduit dans le réacteur les cendres volantes issues de la combustion dans la chaudière.

Selon une autre caractéristique de l'invention, la température du traitement thermique dans le réacteur est comprise entre 1100 et 1400 °C.

Selon une autre caractéristique de l'invention, les matières solides issues du réacteur thermique et envoyées en cimenterie contiennent moins de 5% de sulfate de calcium.

Selon une autre caractéristique de l'invention, l'alimentation du réacteur est commandée à partir de la mesure de la pression dans la chaudière.

Selon une autre caractéristique de l'invention, l'injection dans la chaudière de matières réactivées est commandée par une mesure de la teneur en anhydride sulfureux dans les fumées de la chaudière.

L'invention a également pour objet un dispositif de traitement thermique pour la mise en oeuvre du procédé, caractérisé en ce qu'il comprend une chaudière à lit fluidisé circulant recevant un combustible contenant du soufre et du calcaire, des moyens pour broyer le combustible, préalablement à son introduction dans la chaudière, à une granulométrie inférieure à 100 microns, des moyens pour broyer le calcaire, préalablement à son introduction dans la chaudière, à une granulométrie centrée sur la plage 100 à 150 microns, avec un maximum inférieur à 1 mm, un réacteur pour traiter thermiquement les résidus de la chaudière, une unité de production d'acide sulfurique recevant les gaz produits par le traitement thermique dans le réacteur, ledit réacteur étant associé à des moyens pour réactiver les matières solides produits par le traitement thermique dans le réacteur, ces moyens comprenant une trempe à l'eau et un broyage, et des moyens pour acheminer les matières solides réactivées en partie vers le foyer de la chaudière et en partie vers une utilisation en cimenterie.

Dans un premier mode de réalisation, le réacteur est un réacteur à lit vertical descendant comprenant un foyer prolongé à sa partie inférieure par une enceinte, ledit foyer recevant à sa partie supérieure, par un premier conduit les matières à traiter provenant de la chaudière, et par des seconds conduits de l'air enrichi en oxygène et du combustible, l'enceinte recevant par un quatrième conduit de l'eau pour assurer une trempe à l'eau des produits gazeux et solides issus de la combustion, l'enceinte comprenant un cinquième conduit pour l'évacuation des gaz issus du traitement thermique et un broyeur pour le broyage des matières solides évacuées par une ouverture à la base de l'enceinte.

Dans un second mode de réalisation, le réacteur est du type à lit fluidisé vertical comprenant une chambre de combustion recevant des flux d'air radiaux par des premiers conduits, un flux d'air enrichi en oxygène axial ascendant par un second conduit, un flux de combustible par un troisième conduit, lesdits premier, second et troisième conduits étant placés à la base de ladite chambre de combustion, ladite chambre de combustion recevant les matières à traiter par un quatrième conduit, ladite chambre de combustion étant prolongée à sa partie inférieure par une enceinte recevant par un cinquième conduit de l'eau pour assurer une trempe à l'eau des matières solides issues du traitement thermique, la chambre de combustion comprenant un sixième conduit pour l'évacuation des gaz produits par le traitement thermique, l'enceinte comprenant un broyeur pour le broyage des matières solides évacuées par une ouverture à la base de l'enceinte.

Dans un troisième mode de réalisation, le réacteur est un réacteur à lit mobile de fusion, comprenant une chambre de combustion à sole inclinée, recevant les matières à traiter à une extrémité de la sole par un premier conduit relié à la base de la chaudière et recevant de l'air enrichi en oxygène et un combustible par des second et troisième conduits respectifs à la partie supérieure de la chambre, les produits gazeux issus du traitement thermique étant évacués de la chambre de combustion par un quatrième conduit, les matières pâteuses issues du traitement thermique tombant par débordement dans une seconde enceinte recevant par un cinquième conduit de l'eau pour leur assurer une trempe à l'eau, l'enceinte comprenant un broyeur pour le broyage desdites matières qui sont évacués hors de ladite enceinte par un convoyeur.

Dans un quatrième mode deréalisation, le réacteur est un réacteur à four tournant, comprenant un tambour à axe incliné, recevant les matières à traiter à une première extrémité par un premier conduit relié à la base de la chaudière et recevant de l'air enrichi en oxygène et un combustible par des second et troisième conduits respectifs débouchant dans le tambour à la même extrémité, les gaz issus du traitement thermique étant évacués de la chambre de combustion par un quatrième conduit placé à une seconde extrémité dudit tambour, les matières solides issues du traitement thermique tombant par gravité dans une seconde enceinte recevant par un cinquième conduit de l'eau pour assurer une trempe à l'eau desdites matières solides issus du traitement thermique, l'enceinte comprenant un broyeur pour le broyage desdites matières solides qui sont évacués hors de ladite enceinte par un convoyeur.

L'invention sera bien comprise à la lecture de la description ci-après du procédé et de divers modes de mises en oeuvre, en référence au dessin annexé dans lequel:
- la figure 1 est un schéma synoptique montrant les diverses étapes du procédé de l'invention,
- la figure 2 est le schéma d'une unité de traitement thermique pour la mise en oeuvre du procédé, selon un premier mode de réalisation,
- la figure 3 est le schéma d'une unité de traitement thermique pour la mise en oeuvre du procédé, selon un second mode de réalisation,
- la figure 4 est le schéma d'une unité de traitement thermique pour la mise en oeuvre du procédé, selon un troisième mode de réalisation,
- la figure 5 est le schéma d'une unité de traitement thermique pour la mise en oeuvre du procédé, selon un quatrième mode de réalisation,

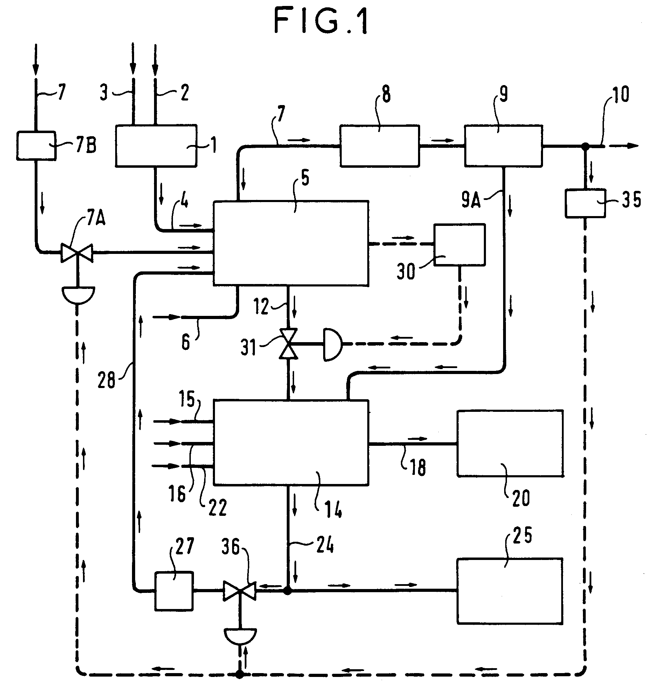

Dans la figure 1, la référence 1 désigne un broyeur, recevant un charbon ou un résidu pétrolier 2, contenant du soufre; de l'air 3 est injecté dans le broyeur pour véhiculer le produit broyé.

Selon une caractéristique de l'invention, ce broyage est effectué à moins de 100 microns, ce qui permet de transformer les cendres introduites en cendres volantes, non récupérées à la base du foyer, et donc de les séparer de l'absorbant extrait au bas du foyer qui sera traité, régénéré puis réinjecté.

Le produit broyé 4 est introduit dans le foyer d'une chaudière à lit fluidisé circulant 5; on introduit également dans la chaudière de l'air 6 et du calcaire 7. Ce calcaire est broyé par un dispositif de broyage 7B de manière à lui conférer une granulométrie adaptée à l'hydrodynamique avec une teneur limitée en fines. De préférence, la granulométrie du calcaire est centrée sur la plage 100 à 150 microns, avec un maximum de 1mm.

Les fumées de combustion 7 sont refroidies dans un échangeur de chaleur 8 et dépoussiérées par un dépousiéreur 9 avant d'être évacuées à l'atmosphère 10.

Les résidus de combustion 12, constitués de chaux, de sulfate de calcium et d'une partie faible de cendres de charbon, sont recueillis à la base du foyer à une température voisine de 850°C, permettant de capter l'anhydride sulfureux SO2 de façon optimale dans le foyer qui joue le rôle d'absorbeur de SO2; les résidus 12 sont envoyés dans une unité de traitement thermique 14 alimentée par un combustible 15 tel que du charbon et de l'air 16 éventuellement enrichi d'oxygène. L'unité de traitement thermique reçoit également les poussières recueillies dans le dépoussiéreur 9, comme il est indiqué par la conduite 9A. La température à l'intérieur de l'unité 14 est comprise entre 1100 et 1400°C, de sorte que le sulfate de calcium CaSO4 se décompose pour donner notamment de le chaux CaO et de l'anhydride sulfureux SO2. Ce gaz 18, mélangé aux gaz de combustion parmi lesquels de l'azote N2, de l'anhydride carboniques CO2 et de l'oxygéne en excès, est évacué et envoyé à une unité de production d'acide sulfurique 20. On connaît, par exemple par le document "Les Techniques de l'Ingénieur J 6095", un exemple d'unité de production d'acide sulfurique.

Les matières solides résultant de la combustion qui a lieu dans l'unité thermique 14, contiennent de la chaux CaO et une partie faible (par exemple inférieure à 5%) de cendres du combustible, fonction de la finesse du broyage.

De l'eau 22 est injectée à la partie inférieure de l'unité thermique 14, et les matières solides sont broyées.

Cette double opération de trempe à l'eau et de broyage des matières solides permet de réactiver chimiquement la chaux non combinée. En effet, la chaux, après traitement thermique, est revêtue en surface d'une couche frittée qui ne permet plus d'avoir de combinaison chimique avec un milieu extérieur; la trempe et le broyage dégagent de nouvelles surfaces actives. Une partie du produit 24 ainsi réactivé est envoyée sous forme de suspension dans l'eau, et avec l'aide éventuelle d'une pompe 27, au foyer de la chaudière 5. Ils réagissent avec l'anhydride sulfureux dégagé lors de la comustion du combustible soufré comme indiqué précédemment. Grâce à ces dispositions, il n'y a sensiblement plus de calcaire non utilisé dans les résidus de combustion de la chaudière; on peut dire que le bilan total de calcaire injecté dans le foyer correspond à une proportion sensiblement stoechiométrique pour la réaction avec l'anhydride sulfureux.

La fraction non réinjectée des matières solides 24 issues du réacteur 14 est dirigée vers une utilisation 25 en cimenterie qui ne pose plus de problèmes puisqu'elle ne contient pratiquement plus de sulfate de calcium, la proportion en masse étant inférieure à 5%.

Le contrôle du procédé de réinjection dans le foyer des matières solides issues de la combustion dans le réacteur 14 s'effectue ainsi:
- on mesure, au moyen d'un appareil de mesure 30, la pression à l'intérieur du foyer de la chaudière 5; lorsque la pression dépasse un seuil préétabli, on extrait les résidus solides du foyer et on les achemine à l'unité de traitement thermique 14. Cette extraction est symbolisée dans la figure 1 par la vanne commandable 31.
- on effectue, à l'aide d'un appareil de mesure 35, la mesure de la teneur en anhydride sulfureux SO2 des fumées; lorsque le taux atteint un seuil préétabli, on commande l'injection dans le foyer des matières réactivées 24; cette injection est symbolisée par la vanne commandable 36. Cette commande peut également agir sur l'injection de calcaire frais, par action sur la vanne 7A.

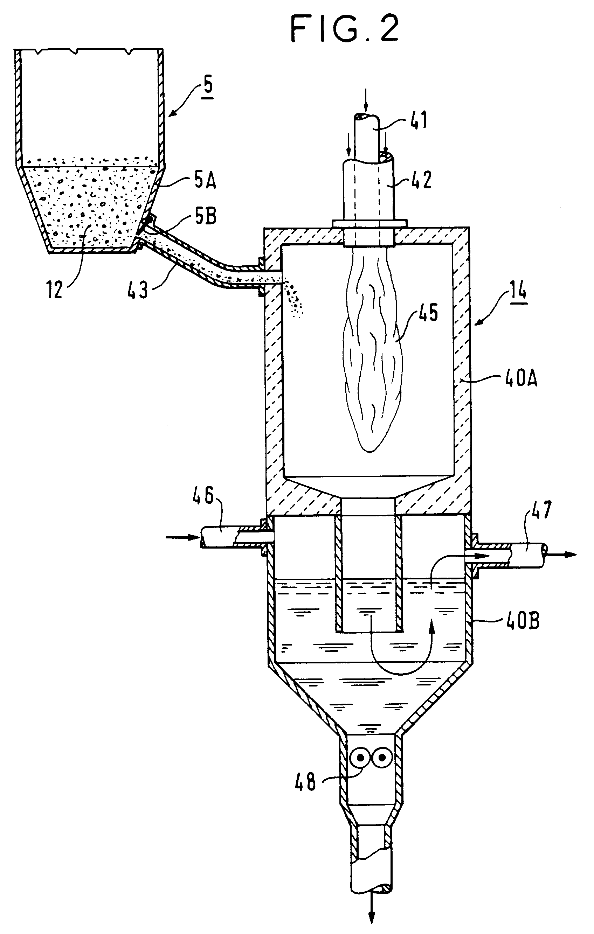

La figure 2 est une vue schématique en coupe axiale d'un premier mode de réalisation d'une unité de traitement thermique 14 (ou réacteur) utilisée en sortie de chaudière pour la mise en oeuvre du procédé de l'invention.

Ce réacteur 14 est du type à lit vertical entraîné descendant.

Il comprend un foyer supérieur 40A, en matériau réfractaire, prolongé par le bas par une enceinte 40B qui peut être métallique.

Le foyer reçoit par des conduits d'arrivée 41 et 42 respectivement de l'air, éventuellement enrichi en oxygène, et un combustible (charbon en poudre par exemple.

La matière à traiter 12 est extraite à la base 5A de la chaudière 5 et descend par gravité dans une canalisation 43 débouchant à la partie supérieure du foyer. Un dispositif d'obturation 5B permet d'arrêter le débit des matières 12. On notera que la chaudière à lit fluidisé autorise de conserver et de stocker à sa base une masse importante de résidus de combustion (inventaire), de sorte que l'unité de traitement thermique des résidus peut être alimentée de façon régulière à partir de cette masse tampon.

La combustion dans le foyer 40A est représenté par la flamme 45.

Les produits résultants du traitement thermique parviennent à la partie inférieure 40B du réacteur où ils subissent une trempe à l'eau; à cet effet, de l'eau est envoyée dans le réacteur par une canalisation 46.

Les gaz, après lavage dans l'eau, sont évacués par une canalisation 47 vers une unité de production d'acide sulfurique.

Les matières solides qui résultent du traitement thermique dans le foyer 40A sont trempées à l'eau, broyées par un dispositif de broyage 48, ce qui assure leur réactivation, puis évacuées en vue d'une réinjection partielle dans la chaudière et d'une utilisation de la fraction restante en cimenterie.

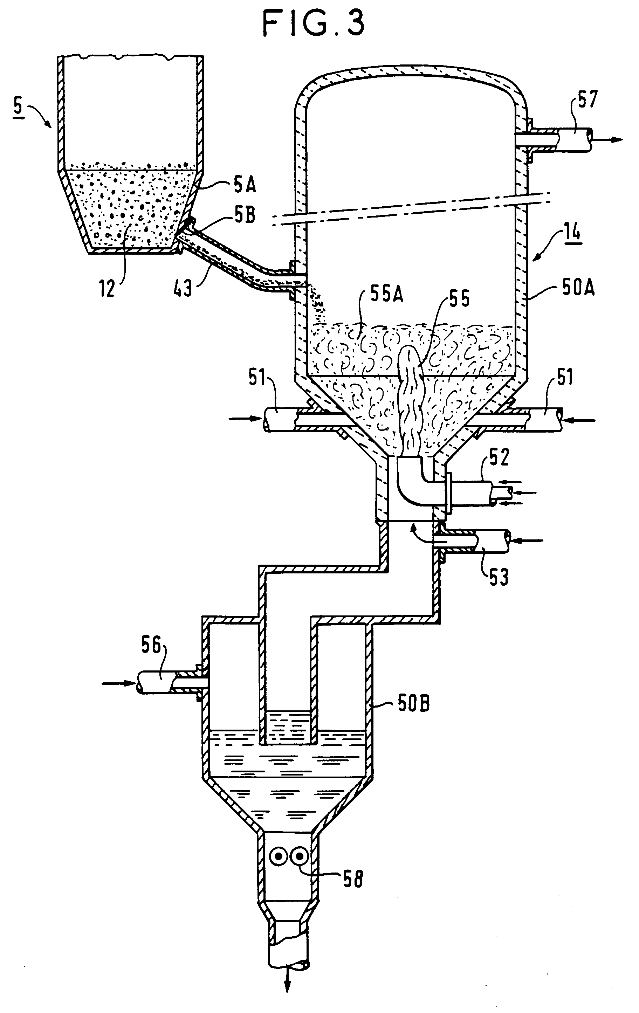

La figure 3 représente un autre mode de réalisation du réacteur 14, du type à lit fluidisé à agglomération de solides.

Il comprend une chambre de combustion 50A prolongée à la partie inférieure par une enceinte 50B.

Comme précédemment, le réacteur reçoit le produit à traiter 12 par une canalisation 43 reliée à la base 5A de la chaudière 5.

La chambre de combustion est munie à sa base d'arrivées d'air enrichi 51 et 52 et d'une arrivée 53 de combustible tel que du charbon pulvérulent.

La combustion est symbolisée par la flamme 55; la référence 55A désigne le lit fluidisé à la partie inférieure de la chambre 50A.

Les produits résultant du traitement thermique parviennent à contre courant dans la partie 50B où ils subissent une trempe à l'eau, grâce à une arrivée d'eau 56. Les gaz issus du traitement thermique sont évacués par la canalisation 57 à la partie supérieure de la chambre 50A.

Les matières solides sont réactivées par l'eau et le broyage au moyen du broyeur 58, puis évacuées en vue d'une réinjection partielle dans la chaudière et d'une utilisation de la fraction restante en cimenterie.

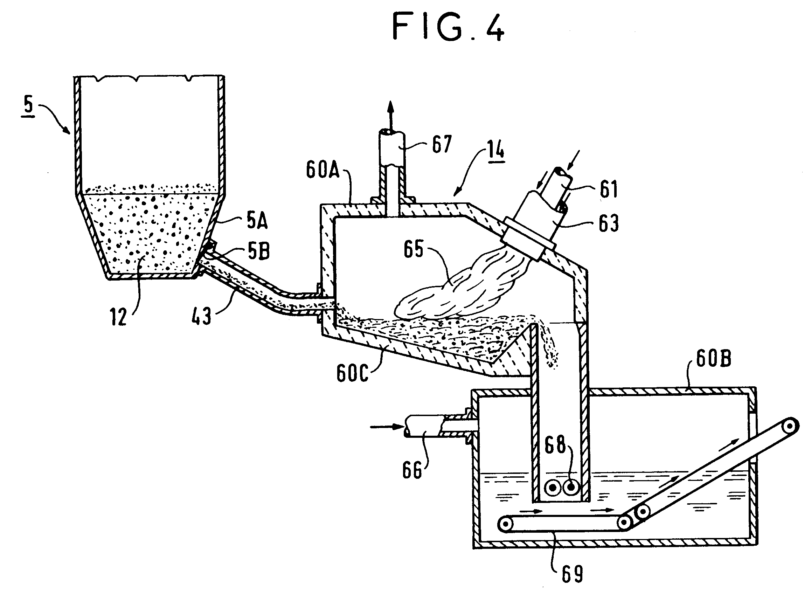

Dans le mode de réalisation de la figure 4, le réacteur 14 est un réacteur à lit mobile de fusion, comprenant une chambre de combustion 60A à sole 60C inclinée, recevant les produits à traiter à une extrémité de la sole par un conduit 43 relié à la base 5A de la chaudière 5, et recevant l'air enrichi et le combustible par des conduits respectifs 61 et 63 à la partie supérieure de la chambre 60A. La combustion est représentée symboliquement par la flamme 65.

Les produits gazeux résultant du traitement thermique, en particulier l'anhydride sulfureux SO2, s'échappent à la partie supérieure de la chambre de combustion par un conduit 67 pour être dirigés vers une unité de production d'acide sulfurique.

Les produits pâteux résultant du traitement thermique tombent par débordement dans une enceinte 60B où ils subissent une trempe à l'eau grâce à un apport d'eau amenée par un conduit 66, et un broyage par un broyeur 68. Les produits solides ainsi réactivés sont extraits de l'enceinte 60B, par exemple par un convoyeur à bande 69, et évacuées en vue d'une réinjection partielle dans la chaudière et d'une utilisation de la fraction restante en cimenterie.

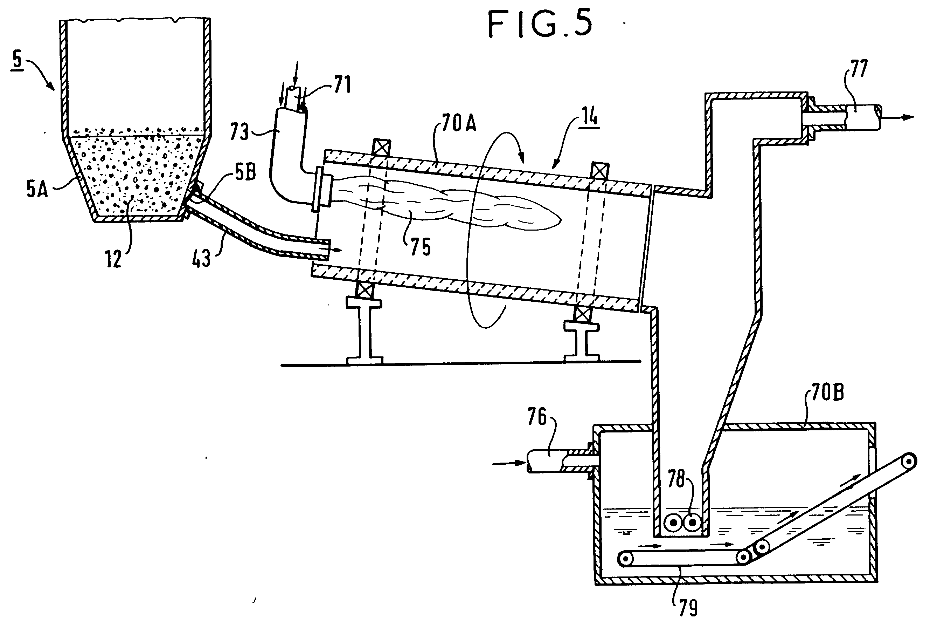

Dans le mode de réalisation de la figure 5, le réacteur 14 est un four tournant comprenant un tambour incliné cylindrique 70A tournant autour de son axe et recevant les produits à traiter à une extrémité par un conduit 43 relié à la base 5A de la chaudière 5, et recevant l'air et le combustible par des conduits respectifs 71 et 73 à la même extrémité. La combustion est représentée symboliquement par la flamme 75.

Les produits gazeux résultant du traitement thermique, en particulier l'anhydride sulfureux SO2, s'échappent à l'extrémité opposée du tambour par un conduit 77 pour être dirigés vers une unité de production d'acide sulfurique.

Les produits solides résultant du traitement thermique tombent par débordement dans une enceinte 70B où ils subissent une trempe à l'eau grâce à un apport d'eau amenée par un conduit 76, et un broyage par un broyeur 78. Les produits solides ainsi réactivés sont extraits de l'enceinte 70B, par exemple par un convoyeur à bande 79, et évacués en vue d'une réinjection partielle dans la chaudière et d'une utilisation de la fraction restante en cimenterie.

L'invention n'es pas limitée aux modes de réalisation décrits et représentés qui n'ont été donnés qu'à titre d'exemples.

## Revendications

1. Procédé de traitement des résidus solides provenant de la combustion, dans le foyer d'une chaudière à lit fluidisé circulant, d'un combustible contenant du soufre, procédé selon lequel du calcaire est introduit dans le foyer pour permettre l'absorption de l'anhydride sulfureux produit sous forme de sulfate de calcium CaSO4, **caractérisé en ce** qu'il comprend en outre les étapes suivantes:
1) on broie le combustible, préalablement à son introduction dans le foyer, à moins de 100 microns,
2) on broie le calcaire, préalablement à son introduction dans le foyer, à une granulométrie centrée dans la plage 100 à 150 microns, avec un maximum de 1 mm,
3) on recueille à la base du foyer les résidus de combustion comprenant de la chaux et du sulfate de calcium provenant de la captation de l'anhydride sulfureux SO2 dégagé par la combustion, et on les traite thermiquement dans un réacteur où l'on obtient un mélange gazeux contenant notamment de l'anhydride sulfureux SO2 et des matières solides à base de chaux CaO,
4) on dirige l'anhydride sulfureux sur une unité de fabrication d'acide sulfurique,
5) on soumet les matières solides à une trempe à l'eau suivie d'un broyage, ces deux opérations ayant pour effet de réactiver la surface spécifique desdites matières solides, et on réinjecte, sous forme de suspension dans l'eau, un partie de ces matières solides dans le foyer de la chaudière, la fraction restante desdites matières étant dirigée vers une utilisation en cimenterie.

2. Procédé selon la revendication 1, caractérisé en ce que le traitement thermique deans le réacteur est effectué avec de l'air enrichi,

3. Procédé selon l'une des revendications 1 et 2, caractérisé en ce que l'on introduit dans le réacteur les cendres volantes issues de la combustion dans la chaudière.

4. Procédé selon l'une des revendications 1 à 3, caractérisé en ce que la température du traitement thermique dans le réacteur est comprise entre 1100 et 1400 °C.

5. Procédé selon l'une des revendications 1 à 4, caractérisé en ce que les matières solides issues du réacteur thermique et envoyées en cimenterie contiennent moins de 5% de sulfate de calcium.

6. Procédé selon l'une des revendications 1 à 5, caractérisé en ce que l'alimentation du réacteur (14) est commandée à partir de la mesure de la pression dans la chaudière.

7. Procédé selon l'une des revendications 1 à 6, caractérisé en ce que l'injection dans la chaudière de matières réactivées est commandée par une mesure de la teneur en anhydride sulfureux dans les fumées de la chaudière.

8. Dispositif de traitement thermique pour la mise en oeuvre du procédé selon l'une des revendications 1 à 7 comprenant, une chaudière à lit fluidisé circulant (5) recevant un combustible contenant du soufre et du calcaire, caractérisé en ce qu'il comprend des moyens (1) pour broyer le combustible, préalablement à son introduction dans la chaudière, à une granulométrie inférieure à 100 microns, des moyens (7B) pour broyer le calcaire, préalablement à son introduction dans la chaudière, à une granulométrie centrée sur la plage 100 à 150 microns,avec un maximum inférieur à 1 mm, un réacteur (14) pour traiter thermiquement les résidus (12) de la chaudière, une unité de production d'acide sulfurique (20) recevant les gaz (18) produits par le traitement thermique dans le réacteur (14), ledit réacteur (14) étant associé à des moyens pour réactiver les matières solides (24) produits par le traitement thermique dans le réacteur (14), ces moyens comprenant une trempe à l'eau et un broyage, et des moyens (27) pour acheminer les matières solides réactivées en partie vers le foyer de la chaudière (5) et en partie vers une utilisation en cimenterie.

9. Dispositif de traitement thermique selon la revendication 8, caractérisé en ce que le réacteur (14) est un réacteur à lit vertical descendant comprenant un foyer (40A) prolongé à sa partie inférieure par une enceinte (40B), ledit foyer recevant à sa partie supérieure, par un premier conduit (43) les matières à traiter provenant de la chaudière (5), et par des seconds conduits (41, 42) de l'air enrichi en oxygène et du combustible, l'enceinte (40) recevant par un quatrième conduit (46) de l'eau pour assurer une trempe à l'eau des produits gazeux et solides issus de la combustion, l'enceinte (40B) comprenant un cinquième conduit (47) pour l'évacuation des gaz issus du traitement thermique et un broyeur (48) pour le broyage des matières solides évacuées par une ouverture à la base de l'enceinte.

10. Dispositif de traitement thermique selon la revendication 8, caractérisé en ce que le réacteur (14) est du type à lit fluidisé vertical comprenant une chambre de combustion (50A) recevant des flux d'air radiaux par des premiers conduits (51), un flux d'air enrichi en oxygène axial ascendant par un second conduit (52), un flux de combustible par un troisième conduit (53), lesdits premier, second et troisième conduits étant placés à la base de ladite chambre de combustion, ladite chambre de combustion recevant les matières (12) à traiter par un quatrième conduit(43), ladite chambre de combustion étant prolongée à sa partie inférieure par une enceinte (50B) recevant par un cinquième conduit (56) de l'eau pour assurer une trempe à l'eau des matières solides issues du traitement thermique, la chambre de combustion (50A) comprenant un sixième conduit (57) pour l'évacuation des gaz produits par le traitement thermique, l'enceinte (50B) comprenant un broyeur (58) pour le broyage des matières solides évacuées par une ouverture à la base de l'enceinte.

11. Dispositif de traitement thermique selon la revendication 8, caractérisé en ce que le réacteur (14) est un réacteur à lit mobile de fusion, comprenant une chambre de combustion (60A) à sole (60C) inclinée, recevant les matières à traiter (12) à une extrémité de la sole par un premier conduit (43) relié à la base (5A) de la chaudière (5) et recevant de l'air enrichi en oxygène et un combustible par des second et troisième conduits respectifs (61, 63) à la partie supérieure de la chambre 60A, les produits gazeux issus du traitement thermique étant évacués de la chambre de combustion par un quatrième conduit (67), les matières pâteuses issues du traitement thermique tombant par débordement dans une seconde enceinte (60B) recevant par un cinquième conduit (66) de l'eau pour leur assurer une trempe à l'eau, l'enceinte (60B) comprenant un broyeur (68) pour le broyage desdites matières qui sont évacués hors de ladite enceinte (60B) par un convoyeur (69).

12. Dispositif de traitement thermique selon la revendication 8, caractérisé en ce que le réacteur (14) est un réacteur à four tournant, comprenant un tambour (70A) à axe incliné, recevant les matières à traiter (12) à une première extrémité par un premier conduit (43) relié à la base (5A) de la chaudière (5) et recevant de l'air enrichi en oxygène et un combustible par des second et troisième conduits respectifs (71, 73) débouchant dans le tambour à la même extrémité, les gaz issus du traitement thermique étant évacués de la chambre de combustion par un quatrième conduit (77) placé à une seconde extrémité dudit tambour, les matières solides issues du traitement thermique tombant par gravité dans une seconde enceinte (70B) recevant par un cinquième conduit (76) de l'eau pour assurer une trempe à l'eau desdites matières solides issus du traitement thermique, l'enceinte (70B) comprenant un broyeur (78) pour le broyage desdites matières solides qui sont évacués hors de ladite enceinte (70B) par un convoyeur (79).

## Claims

1. A method of treating solid residue resulting from combustion of a sulfur-containing fuel in the hearth of a boiler having a circulating fluidized bed, in which method limestone is inserted into the hearth so as to make it possible to absorb the resulting sulfur dioxide in the form of calcium sulfate CaSO₄, said method being characterized in that it further includes the following steps:
1) prior to being inserted into the hearth, the fuel is ground down to less than 100 microns;
2) prior to being inserted into the hearth, the limestone is ground down to a grain-size centered in the range 100 microns to 150 microns, with a maximum of 1 mm;
3) at the base of the hearth, the combustion residue is collected, which residue includes lime and calcium sulfate resulting from taking up the sulfur dioxide SO₂ evolved by the combustion, and said residue is subjected to heat treatment in a reactor, in which both solid matter based on lime CaO, and also a gaseous mixture containing, in particular, sulfur dioxide SO₂ are obtained;
4) the sulfur dioxide is routed to a sulfuric acid manufacturing unit; and
5) the solid matter is quenched with water, and is then ground, these two operations reactivating the specific surface area of said solid matter, and a portion of this solid matter is re-injected into the hearth of the boiler in the form of a suspension in water, the remaining fraction of said matter being routed to a cement plant.

2. A method according to claim 1, characterized in that the heat treatment in the reactor is performed with oxygen-enriched air.

3. A method according to claim 1 or 2, characterized in that the fly ash resulting from combustion in the boiler is inserted into the reactor.

4. A method according to any one of claims 1 to 3, characterized in that the temperature of the heat treatment in the reactor lies in the range 1,100°C to 1,400°C.

5. A method according to any one of claims 1 to 4, characterized in that the solid matter taken from the heat treatment reactor and sent to the cement plant contains less than 5% of calcium sulfate.

6. A method according to any one of claims 1 to 5, characterized in that the reactor (14) is fed on the basis of the measured pressure in the boiler.

7. A method according to any one of claims 1 to 6, characterized in that the reactivated matter is injected into the boiler on the basis of the measured sulfur dioxide content in the flue gases from the boiler.

8. Heat treatment apparatus for implementing the method according to any one of claims 1 to 7, said apparatus including a boiler (5) having a circulating fluidized bed, and receiving a sulfur-containing fuel and limestone, and being characterized in that it includes means (1) for grinding the fuel down to less than 100 microns prior to inserting it into the boiler, means (7B) for grinding the limestone down to a grain-size centered on the range 100 microns to 150 microns, with a maximum of less than 1 mm, prior to inserting it into the boiler, a reactor (14) for subjecting the residue (12) from the boiler to heat treatment, a sulfuric acid production unit (20) receiving the gases (18) resulting from the heat treatment in the reactor (14), said reactor (14) being associated with means for reactivating the solid matter (24) resulting from the heat treatment in the reactor (14), which means comprise quenching with water and grinding, and means (27) for routing the reactivated solid matter in part to the hearth of the boiler (5), and in part to a cement plant.

9. Heat treatment apparatus according to claim 8, characterized in that the reactor (14) is a downward vertical bed reactor comprising a hearth (40A) extended at its bottom by an enclosure (40B), the top of said hearth receiving the matter to be treated from the boiler (5) via a first duct (43), and fuel and oxygen-enriched air via respective second ducts (41, 42), the enclosure (40) receiving water via a fourth duct (46) for quenching the gaseous and solid products resulting from combustion, the enclosure (40B) being provided with a fifth duct (47) for removing the gases resulting from the heat treatment, and with a grinder (48) for grinding the solid matter removed via an opening at the base of the enclosure.

10. Heat treatment apparatus according to claim 8, characterized in that the reactor (14) is of the vertical fluidized bed type comprising a combustion chamber (50A) receiving radial air flows via first ducts (51), an upward axial oxygen-enriched air flow via a second duct (52), and a fuel flow via a third duct (53), said first, second, and third ducts being placed at the base of said combustion chamber, said combustion chamber receiving the matter (12) to be treated via a fourth duct (43), said combustion chamber being extended at its bottom by an enclosure (50B) receiving water via a fifth duct (56) for quenching the solid matter resulting from the heat treatment, the combustion chamber (50A) being provided with a sixth duct (57) for removing the gases resulting from the heat treatment, the enclosure (50B) including a grinder (58) for grinding the solid matter removed via an opening at the base of the enclosure.

11. Heat treatment apparatus according to claim 8, characterized in that the reactor (14) is reactor having a molten moving bed, and including a combustion chamber (60A) having a sloping floor (60C), the reactor receiving the matter to be treated (12) at one end of the floor via a first duct (43) connected to the base (5A) of the boiler (5), and receiving oxygen-enriched air, and fuel via respective second and third ducts (61, 63) at the top of the chamber 60A, the gaseous products resulting from the heat treatment being removed from the combustion chamber via a fourth duct (67), the semi-solid matter resulting from the heat treatment overflowing into a second enclosure (60B) receiving water via a fifth duct (66) for quenching said semi-solid matter, the second enclosure (60B) including a grinder (68) for grinding said matter, which is removed from said enclosure (60B) via a conveyor (69).

12. Heat treatment apparatus according to claim 8, characterized in that the reactor (14) is a rotary-kiln reactor comprising a drum (70A) having a sloping axis, receiving the matter to be treated (12) at a first end via a first duct (43) connected to the base (5A) of the boiler (5), and receiving oxygen-enriched air and a fuel via respective second and third ducts (71, 73) opening into the drum at the same end, the gases resulting from the heat treatment being removed from the combustion chamber via a fourth duct (77) placed at a second end of said drum, the solid matter resulting from the heat treatment falling by gravity into a second enclosure (70B) receiving water via a fifth duct (76) for quenching said solid matter resulting from the heat treatment, the enclosure (70B) including a grinder (78) for grinding said solid matter, which is removed from said enclosure (70B) via a conveyor (79).

## Patentansprüche

1. Verfahren zur Behandlung von aus der Verbrennung eines schwefelhaltigen Brennstoffs stammenden festen Rückständen im Ofen eines Kessels mit umlaufendem Wirbelbett, gemäß welchem Kalkstein in den Ofen eingeführt wird, um die Absorption des Schwefeldioxids zu gestatten, das in Form von Calciumsulfat CaSO₄ erzeugt wird, **dadurch gekennzeichnet**, dass es außerdem die folgenden Schritte umfasst:
1) der Brennstoff wird vor seiner Einführung in den Ofen auf unter 100 µm zerkleinert,
2) der Kalkstein wird vor seiner Einführung in den Ofen auf eine Korngrößenverteilung, die in dem Bereich von 100 bis 150 µm zentriert ist, mit einem Maximum von 1 mm, zerkleinert
3) am Boden des Ofens werden die Verbrennungsrückstände gewonnen, die den Kalk und das Calciumsulfat umfassen, das vom Auffangen des durch die Verbrennung freigesetzten Schwefeldioxids SO₂ stammt, und sie werden in einem Reaktor wärmebehandelt, wo eine gasförmige Mischung erhalten wird, die insbesondere Schwefeldioxid SO₂ enthält, und Feststoffe auf Basis von Kalk CaO,
4) das Schwefeldioxid wird zu einer Einheit zur Herstellung von Schwefelsäure geleitet,
5) die festen Materialien werden einer Abschreckung mit Wasser, gefolgt von einer Zerkleinerung, unterzogen, wobei diese Vorgänge die Wirkung haben, die spezifische Oberfläche der Feststoffe zu reaktivieren, und ein Teil dieser Feststoffe wird in Form einer Suspension in Wasser erneut in den Ofen des Kessels eingespritzt, wobei der verbleibende Teil der Materialien einer Verwendung im Zementwerk zugeführt wird.

2. Verfahren nach Anspruch 1, dadurch gekennzeichnet, dass die Wärmebehandlung im Reaktor mit angereicherter Luft ausgeführt wird.

3. Verfahren nach einem der Ansprüche 1 und 2, dadurch gekennzeichnet, dass in den Reaktor die von der Verbrennung im Kessel stammende, lose Asche eingeführt wird.

4. Verfahren nach einem der Ansprüche 1 bis 3, dadurch gekennzeichnet, dass die Temperatur der Wärmebehandlung im Reaktor zwischen 1100 und 1400°C liegt.

5. Verfahren nach einem der Ansprüche 1 bis 4, dadurch gekennzeichnet, dass die Feststoffe, die vom thermischen Reaktor stammen und zum Zementwerk geschickt werden, weniger als 5% Calciumsulfat enthalten.

6. Verfahren nach einem der Ansprüche 1 bis 5, dadurch gekennzeichnet, dass die Zufuhr zum Reaktor (14) ausgehend von der Messung des Drucks im Kessel gesteuert wird.

7. Verfahren nach einem der Ansprüche 1 bis 6, dadurch gekennzeichnet, dass die Einspritzung von reaktivierten Materialien in den Kessel durch eine Messung des Gehalts an Schwefeldioxid im Rauch des Kessels gesteuert wird,

8. Wärmebehandlungsvorrichtung zur Durchführung des Verfahrens nach einem der Ansprüche 1 bis 7, die einen Kessel (5) mit umlaufendem Wirbelbett umfasst, der einen schwefelhaltigen Brennstoff und Kalkstein aufnimmt, dadurch gekennzeichnet, dass sie Mittel (1) zum Zerkleinern des Brennstoffs vor seiner Einführung in den Kessel zu einer Korngrößenverteilung unter 100 µm, Mittel (7B) zur Zerkleinerung des Kalksteins vor seiner Einführung in den Kessel zu einer Korngrößenverteilung, die auf den Bereich 100 bis 150 µm zentriert ist, mit einem Maximum unter 1 mm, einen Reaktor (14), um die Rückstände (12) aus dem Kessel wärmezubehandeln, eine Einheit (20) zur Herstellung von Schwefelsäure, die die durch die Wärmebehandlung im Reaktor (14) erzeugten Gase (18) aufnimmt, wobei der Reaktor (14) mit Mitteln zum Reaktivieren der durch die Wärmebehandlung im Reaktor (14) erzeugten Feststoffe (24) verbunden ist, wobei diese Mittel eine Abschreckung mit Wasser und eine Zerkleinerung umfassen, und Mittel (27) umfasst, um die reaktivierten Feststoffe teilweise dem Ofen des Kessels (5) und teilweise einer Verwendung im Zementwerk zuzuführen.

9. Wärmebehandlungsvorrichtung nach Anspruch 8, dadurch gekennzeichnet, dass der Reaktor (14) ein Reaktor mit absinkendem vertikalem Bett ist, der einen Ofen (40A) umfasst, der an seinem unteren Teil durch einen Raum (40B) verlängert ist, wobei der Ofen an seinem oberen Teil über eine erste Leitung (43) die vom Kessel (5) stammenden, zu behandelnden Materialien und über zweite Leitungen (41, 42) mit Sauerstoff angereicherte Luft und Brennstoff aufnimmt, wobei der Raum (40) über eine vierte Leitung (46) aufnimmt, um eine Abschreckung der von der Verbrennung stammenden gasförmigen und festen Produkte mit Wasser sicherzustellen, wobei der Raum (40B) eine fünfte Leitung (47) zum Ablassen von aus der Wärmebehandlung stammenden Gasen und einen Zerkleinerer (48) zum Zerkleinern der Feststoffe umfasst, die durch eine Öffnung an der Basis des Raumes entleert werden.

10. Wärmebehandlungsvorrichtung nach Anspruch 8, dadurch gekennzeichnet, dass der Reaktor (14) vom Typ mit vertikalem Wirbelbett ist, der eine Verbrennungskammer (50A) umfasst, die über erste Leitungen (51) radiale Luftströme, über eine zweite Leitung (52) einen aufsteigenden axialen Strom von mit Sauerstoff angereicherter Luft, über eine dritte Leitung (53) einen Brennstoffstrom aufnimmt, wobei sich die ersten, zweiten und dritten Leitungen an der Basis der Verbrennungskammer befinden, wobei die Verbrennungskammer über eine vierte Leitung (43) die zu behandelnden Materialien (12) aufnimmt, wobei die Verbrennungskammer an ihrem unteren Teil durch einen Raum (50B) verlängert ist, der über eine fünfte Leitung (56) Wasser aufnimmt, um eine Abschreckung der von der Wärmebehandlung stammenden Feststoffe sicherzustellen, wobei die Verbrennungskammer (50A) eine sechste Leitung (57) zum Ablassen der durch die Wärmebehandlung erzeugten Gase umfasst, wobei der Raum (50B) einen Zerkleinerer (58) für die Zerkleinerung der Feststoffe umfasst, die über eine Öffnung an der Basis des Raumes entleert werden.

11. Wärmebehandlungsvorrichtung nach Anspruch 8, dadurch gekennzeichnet, dass der Reaktor (14) ein Reaktor mit Gattierungs-Bewegtbett ist, der eine Verbrennungskammer (60A) mit geneigtem Herd (60C) umfasst, der über eine erste Leitung (43), die mit der Basis (5A) des Kessels (5) verbunden ist, an einem Ende des Herdes die zu behandelnden Materialien (12) aufnimmt und über jeweilige zweite und dritte Leitungen (61, 63) am oberen Teil der Kammer (60A) mit Sauerstoff angereicherte Luft und einen Brennstoff aufnimmt, wobei die von der Wärmebehandlung stammenden gasförmigen Produkte über eine vierte Leitung (67) aus der Verbrennungskammer abgelassen werden, wobei die von der Wärmebehandlung stammenden pastösen Materialien durch Überfließen in einen zweiten Raum (60B) fallen, der über eine fünfte Leitung (66) Wasser aufnimmt, um deren Abschreckung mit Wasser sicherzustellen, wobei der Raum (60B) einen Zerkleinerer (68) für die Zerkleinerung der Materialien umfasst, die über einen Förderer (69) aus dem Raum (60) abgezogen werden.

12. Wärmebehandlungsvorrichtung nach Anspruch 8, dadurch gekennzeichnet, dass der Reaktor (14) ein Reaktor mit Drehofen ist, der eine Trommel (70A) mit geneigter Achse umfasst, die über eine erste Leitung (43) die mit der Basis (5A) des Kessels (5) verbunden ist, an einem ersten Ende die zu behandelnden Materialien (12) aufnimmt und über jeweilige zweite und dritte Leitungen (71, 73), die am selben Ende in die Trommel münden, mit Sauerstoff angereicherte Luft und einen Brennstoff aufnimmt, wobei die von der Wärmebehandlung stammenden Gase über eine vierte Leitung (77), die sich an einem zweiten Ende der Trommel befindet, aus der Verbrennungskammer abgelassen werden, wobei die von der Wärmebehandlung stammenden Feststoffe durch Schwerkraft in einen zweiten Raum (70B) fallen, der über eine fünfte Leitung (76) Wasser aufnimmt, um eine Abschreckung der von der Wärmebehandlung stammenden Feststoffe mit Wasser sicherzustellen, wobei der Raum (70B) einen Zerkleinerer (78) zur Zerkleinerung der Feststoffe umfasst, die über einen Förderer (79) aus dem Raum (70B) abgezogen werden.
